# EUROPEAN PATENT SPECIFICATION

(11) **EP 0 617 066 B1**
(45) Date of publication and mention of the grant of the patent: **28.01.1998**
(21) Application number: 94201292.3
(22) Date of filing: 09.11.1988
(51) Int. Cl.: C08G 18/10, C08G 18/32, C08G 18/38, C08G 18/76

(54) **Thermosetting urethane elastomer**
Hitzehärtbares Urethan-Elastomer
Elastomère d'uréthane thermodurcissable

(30) Priority: 11.11.1987 JP 282999/87
(43) Date of publication of application: 28.09.1994
(62) Divisional of application: 88310537.1
(73) Proprietor: NIPPON POLYURETHANE INDUSTRY CO. LTD., Minato-ku Tokyo (JP)
(72) Inventor: Kawasaki, Masahiro, Matsudo-shi, Chiba-ken (JP); Ohbuchi, Yukio, Yokohama-shi, Kanagawa-ken (JP); Maeda, Yoshiaki, Yokohama-shi, Kanahawa-ken (JP); Sato, Susumu, Yokohama-shi, Kanagawa-ken (JP)
(74) Representative: West, Alan Harry

(56) References cited:
- EP-A- 0 240 118
- FR-A- 1 185 779
- FR-A- 2 175 119

## Description

This invention relates to a thermosetting urethane elastomer, more particularly to a thermosetting urethane, elastomer prepared from a prepolymer containing terminal isocyanate groups obtained from p-phenylene diisocyanate (hereinafter abbreviated to PPDI) and a polyol, and a curing agent comprising specific polyols.

Thermosetting urethane elastomers are generally produced (a) by curing a prepolymer containing terminal isocyanate groups and derived from a diisocyanate such as tolylene diisocyanate, diphenylmethane diisocyanate (hereinafter abbreviated to MDI) or hexamethylene diisocyanate, and a polyol such as polyether polyol, polyester polyol or polycaprolactone polyol, using a glycol such as 1,4-butylene glycol (hereinafter abbreviated to 1,4-BG) or an amine such as 3,3'-dichloro-4,4'-diaminodiphenyl-methane, or (b) by rapidly curing an unstable prepolymer derived from 1,5-naphthalene diisocyanate (hereinafter abbreviated to NDI) and a polyester polyol, with a glycol such as 1,4-BG.

These thermosetting urethane elastomers are highly elastic, having excellent tensile strength, and have been widely used for rolls, solid tires and belts. However, the elastomer obtained in method (a) is inferior in heat resistance, has a hardness greatly dependent on temperature, and is therefore unsuitable for use in environments subjected to elevated temperatures or to large changes of temperature. In contrast, the prepolymer obtained in method (b) has excellent heat resistance, but since it is obtained from an unstable prepolymer drawbacks are involved in the equipment used for its production and in the time restrictions involved.

Among patent publications in this area, FR-A-2175119 for example describes coating compositions based on isocyanate-terminated urethane prepolymers and addition products of substituted isocyanurates and substituted lactones. Also, FR-A-1339799 describes a procedure for forming polyurethane coatings for electrical conductors in which an aromatic polyisocyanate such as MDI is reacted with an alkyl aromatic diol such as hydroquinone bis-(2-hydroxyethyl) ether and a triol such as trimethylolpropane.

The present invention which seeks to improve the heat resistance and temperature variation in physical properties of thermosetting urethane elastomers is derived from intensive investigations on combinations of various prepolymers containing terminal isocyanate groups and derived from diisocyanate and polyol, with various curing agents, and is based on the discovery that such properties can be improved by use of a combination of a specific diisocyanate with a specific curing agent.

According to the invention, there is now provided a thermosetting urethane elastomer prepared from:
(a) a prepolymer having from 2 to 20 weight % terminal isocyanate groups obtained by allowing p-phenylene diisocyanate to react with a compound having 2 or more active hydrogen atoms and a molecular weight from 62 to 6,000 other than 1,4-bis(2-hydroxyethoxy)benzene, or a polyol having an isocyanurate ring; and
(b) as curing agent, 1,4,-bis(2-hydroxy-ethoxy)benzene and a polyol having an isocyanurate ring, in a molar ratio of 9.5 : 0.5 to 1 : 9.

As the result of investigations on the starting materials for improving the heat resistance of thermosetting urethane elastomers, it has been found that PPDI is the diisocyanate of choice. PPDI is an aromatic diisocyanate having isocyanate groups at the 1- and 4-positions on the benzene ring, and its melting point is 95 °C.

A prepolymer containing terminal isocyanate groups obtained from PPDI and polyol was cured with various curing agents, and heat resistance and temperature dependency, of the cured product were measured. As a result, the use or BHEB and a polyol having an isocyanurate ring as the curing agents led to a thermosetting urethane elastomer having excellent physical properties being obtained.

A thermosetting urethane elastomer consisting only of the prepolymer and BHEB, although excellent in heat resistance, has the drawback that its compression set is large. The thermosetting urethane elastomer according to the present invention has improved compression set and simultaneously improved heat resistance.

Compounds having two or more active hydrogens which can be used for obtaining the prepolymer having terminal isocyanate groups have an average molecular weight of 62 to 6000, preferably 1000 to 3000. Among them are polyester polyols, polyether polyols, polycarbonate polyols, and polyacrylic polyols.

As the polyester polyol, there may be employed polyester polyols obtained by polycondensation of glycol such as ethylene glycol, 1,2-propylene glycol, 1,3-propylene glycol, 1,3-butylene glycol, 1,4-BG, 2,2-dimethyl-1,3-propane diol, diethylene glycol, 1,5-pentane diol, 3-methyl-1,5-pentane diol, 1,6-hexane diol, cyclohexane-1,4-diol and cyclohexane-1,4-dimethanol, alone or as a mixture with a dibasic acid such as succinic acid, maleic acid, adipic acid, glutaric acid, pimellic acid, suberic acid, azelaic acid, sebacic acid, phthalic acid, isophthalic acid, terephthalic acid, hexahydrophthalic acid and hexahydroisophthalic acid, alone or as a mixture and their acid esters and acid halides and mixtures of the polyester polyols and the glycols, and further lactone type polyols such as polycaprolactone diols obtained by subjecting lactones such as ε-caprolactone to ring-opening addition polymerization in the presence of a glycol.

As the polyether polyol, there may be employed hydroxyl-containing polyether polyols made by the addition polymerization of alkylene oxide such as ethylene oxide and propylene oxide, to glycols such as ethylene glycol, 1,2-propylene glycol, diethylene glycol and polyethylene glycol, polyols having 3 or more functional groups such as glycerine, trimethylolethane, TMP and pentaerythritol, polyamines such as ethylenediamine and toluenediamine, either alone or as a mixture of two or more.

Further, the polycarbonate polyol can be obtained by the reaction of a dialkyl carbonate, an alkylene carbonate or a diaryl carbonate, with a hydroxyl compound, for example, 1,4-BG and 1,6-hexane diol, and these can be also used either alone or as a mixture of two or more.

The mole ratio of BHEB and the polyol containing an isocyanurate ring ranges from 9.5:0.5 to 1:9, preferably from 9:1 to 2:8. The ratio influences various physical properties of the thermosetting urethane elastomer such as hardness, tensile strength and compression set. Accordingly, any thermosetting urethane elastomer having desired properties can be prepared by changing the above ratio.

As the polyol containing an isocyanurate ring, there may be used tris-β-hydroxyethylisocyanurate (hereinafter THEIC) and/or a polyol containing an isocyanurate ring obtained by addition of 1 to 3 moles of caprolactone to 1 mole of THEIC, for example, Placcel E-212 produced by Daicel Co.

Such a polyol containing an isocyanurate ring is represented by the following formula (1): 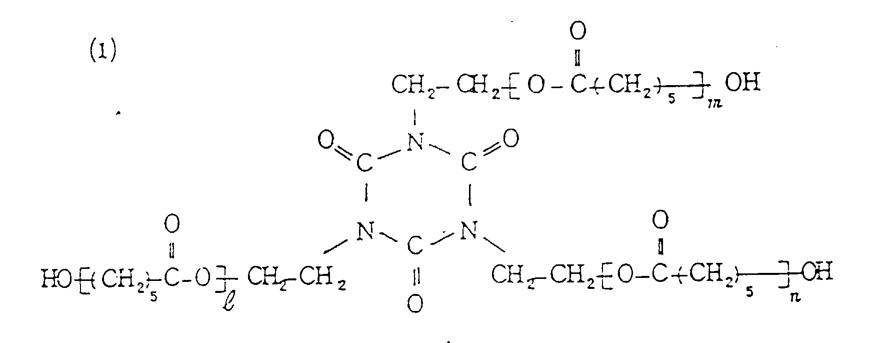 where ℓ, m, n = 0 ~ 1, 0 ≦ ℓ + m + n ≦ 3.

The preparation of the prepolymer having terminal isocyanate groups can be practiced as follows.
(A) By use of a twin-screw extruder, solid PPDI and a liquid polyol are fed quantitatively at a predetermined molar ratio at a cylinder temperature of 70 to 180 °C for continuous synthesis.
(B) A predetermined amount of a polyol is charged into a reaction batch, and after adjustment of temperature to 100 to 130 °C, a predetermined amount of solid PPDI is charged and synthesis is carried out while stirring.
(C) A predetermined amount of solid PPDI and a part of a polyol are charged into a reaction batch, and while the reaction is carried out at 70 to 100°C the remainder of the polyol is charged in several portions, and synthesis is carried out while repeating the reaction.

It is required that the reaction between the organic polyisocyanate and the active hydrogencontaining compound should be conducted so that the isocyanate content in the prepolymer should be 2 to 20% by weight, preferably 3 to 10% by weight. If the isocyanate content in the prepolymer is greater than 20% by weight, the amount of free PPDI is excessive and the prepolymer will have inferior storage stability. On the other hand, if it is smaller than 2% by weight, the isocyanate content as the prepolymer is low and its viscosity becomes very high, and the prepolymer can then be handled only with difficulty.

The thermosetting urethane elastomer of the present invention is preferably prepared by setting the NCO equivalent of the prepolymer and the OH equivalent of the curing agent at a ratio of 1 : 0.8 to 1 : 0.95, adjusting the prepolymer temperature to 110 to 130 °C, the curing agent temperature at 110 to 120 °C and the mold temperature at 120 to 130 °C, stirring predetermined amounts of the prepolymer and the curing agents, and degassing the mixture under reduced pressure prior to casting into the mold, followed by heating for 8 to 15 hours. When a dispersing machine is to be used, it is necessary to perform degassing under reduced pressure before mixing the prepolymer with the curing agent.

According to the present invention, heat resistance and the temperature reduction of physical properties which have been the drawbacks of known thermosetting urethane elastomer, can be improved by a composition comprising a prepolymer containing terminal isocyanate groups by use of PPDI as the diisocyanate and, as the curing agents, BHEB and a polyol containing an isocyanurate ring.

Particularly, compression set which has been deemed to be improved only with difficultly, can also be improved to better than the performance exhibited by the thermosetting urethane elastomer of the prior art.

The thermosetting urethane elastomer of the present invention finds use in environments involving elevated temperatures or great temperature changes where known thermosetting urethane elastomers could not be employed. Specific examples of such uses may include rolls for paper making, printing rolls and rolls for other OA instruments, cleaning blades belts, Orings, sealing materials such as bushes, vibration insulators, solid tires, wheels for casters, and snow plows.

The present invention is described below in more detail by the following Examples. In the Examples, "parts" and "%" are respectively "parts by weight" and "% by weight", unless otherwise noted.

### Example 1

### Synthesis of prepolymer:

PPDI (which is solid at ordinary temperature) at a rate of 0.288 mol/min. and a polycaprolactone polyol (average molecular weight 2000, functionality 2) heated to 80 °C at a rate of 0.144 mol/min. were fed into a twin-screw extruder rotating at 150 rpm, with cylinder temperatures of 80 °C at the feed portion, 120 to 150 °C at the middle portion and 80 °C at the outlet portion, to obtain a prepolymer. The prepolymer was found to have an NCO content of 3.6%.

### Resin formation:

BHEB/E-212 ^{*1}) at a weight ratio of 5.80/1.00 was completely mixed and dissolved to provide a curing agent.
*1) Polyol containing isocyanurate ring, produced by Daicel Co.

The above prepolymer and the curing agent were adjusted to 110 °C and a mold to 120 °C, 100 g of the prepolymer and 10.4 g of the curing agent were well stirred and poured into the mold after degassing under reduced pressure. After casting, heating was effected at 120 °C for 10 hours to obtain a thermosetting urethane elastomer. The urethane elastomer was left to stand at 25 °C for 7 days, and then subjected to various tests. The results are shown in Table 1 to Table 3.

### Example 2

### Synthesis of prepolymer:

PPDI at a rate of 0.505 mol/min. and a polytetramethylene glycol (average molecular weight 1000, functionality 2) heated to 80 °C at a rate of 0.253 mol/min. were fed into a twin-screw extruder rotating at 150 rpm, with cylinder temperatures of 80 °C at the feed portion, 120 to 150 °C at the middle portion and 80 °C at the outlet portion, to obtain a prepolymer. The prepolymer was found to have an NCO content of 6.3%.

### Resin formation:

The curing agent shown in Example 1 was used. The prepolymer and the curing agent were adjusted to 110 °C and a mold to 120 °C, 100 g of the prepolymer and 18.2 g of the curing agent were well stirred and poured into the mold after degassing under reduced pressure. After casting, heating was effected at 120 °C for 10 hours to obtain a thermosetting urethane elastomer. The urethane elastomer was left to stand at 25°C for 7 days, and then subjected to various tests. The results are shown in Table 1 to Table 3.

### Comparative example 1

As the prepolymer, the same prepolymer as in Example 1 was employed.

### Resin formation:

The prepolymer was adjusted to 75 °C, 1,4-BG to 25 °C and a mold to 120 °C, and 100 g of the prepolymer and 3.7 g of 1,4-BG were well stirred and poured into the mold after degassing under reduced pressure.. After casting, heating was effected at 120 °C for 5 hours to obtain a thermosetting urethane elastomer. The urethane elastomer was left to stand at 25 °C for 7 days, and then subjected to various tests. The results are shown in Table 1 to Table 3.

### Comparative example 2

As the prepolymer, the same prepolymer as in Example 2 was employed.

### Resin formation:

Under the same temperature conditions as in Comparative example 1, 100 g of the prepolymer and 6.4 g of 1,4-BG were well stirred and poured into the mold after degassing under reduced pressure. After casting, heating was effected at 120 °C for 5 hours to obtain a thermosetting urethane elastomer. The urethane elastomer was left to stand at 25 °C for 7 days, and then subjected to various tests. The results are shown in Table 1 to Table 3.

### Comparative example 3

### Synthesis of prepolymer:

Into a four-necked round bottomed flask equipped with a stirrer, a thermometer and a pipe for nitrogen atmosphere, 2.00 mol of MDI and 1.00 mol of a polycaprolactone polyol (average molecular weight 1000, functionality 2) were charged and the reaction was carried out under nitrogen at 65 to 75°C for 3 hours. The prepolymer obtained was found to have an NCO content of 5.6%.

### Resin formation:

Under the same temperature conditions as in Comparative example 1, 100 g of the prepolymer and 5.7 g of 1,4-BG were well stirred and poured into the mold after degassing under reduced pressure. After casting, heating was effected at 120 °C for 5 hours to obtain a thermosetting urethane elastomer. The urethane elastomer was left to stand at 25 °C for 7 days, and then subjected to various tests. The results are shown in Table 1 to Table 3.

### Comparative example 4

Into the same round bottomed flask as in Comparative example 3 was charged 1.00 mol of a polyethylene adipate (average molecular weight 2000, functionality 2) and the temperature was adjusted to 120 °C. To the polyethylene adipate was added 2.00 mol of solid NDI, and the reaction was carried out under stirring without heating until the temperature fell to 90 °C. The prepolymer obtained was found to have an NCO content of 3.5%.

### Resin formation:

The prepolymer was adjusted to 100 °C, 1,4-BG to 25 °C and a mold to 120 °C, and 100 g of the prepolymer and 3.6 g of 1,4-BG were well stirred and poured into the mold after degassing under reduced pressure. After casting, heating was effected at 120 °C for 5 hours to obtain a thermosetting urethane elastomer. The urethane elastomer was left to stand at 25 C°for 7 days, and then subjected to various tests. The results are shown in Table 1 to Table 3.

### Comparative example 5

### Synthesis of prepolymer:

The prepolymer obtained in Comparative example 3 was used.

### Resin formation:

By use of the curing agent of Example 1, and similarly under the same temperature conditions as in Example 1, 100 g of the prepolymer and 10.3 g of the curing agent were well stirred and poured into the mold after degassing under reduced pressure. After casting, heating was effected at 120 °C for 10 hours to obtain a thermosetting urethane elastomer. The urethane elastomer was left to stand at 25 °C for 7 days, and then subjected to various tests. The results are shown in Table 1 to Table 3.

### Example 3

### Synthesis of prepolymer

PPDI at a rate of 0.437 mol/min. and a polycaprolactone polyol (average molecular weight 1200, functional group number 2) heated to 80°C at a rate of 0.219 mol/min. were fed into a twin-screw extruder rotating at 150 rpm, with cylinder temperatures of 80°C at the feed portion, 120 to 150°C at the middle portion and 80°C at the outlet portion, to obtain a prepolymer. The prepolymer was found to have an NCO content of 5.5 %.

### Example 4

### Synthesis of prepolymer

The prepolymer obtained in Example 3 was used.

### Examples 3 and 4

### Resin formation

Resin formation in Examples 3 and 4 was carried out at various prepolymer/curing agent ratios and at various BHEB/E-212 ratios as shown in Table 4.

The procedure for mold casting and the conditions after molding were the same as in Example 1. Table 5 shows the physical properties of the thermosetting urethane elastomers obtained in Examples 3 and 4.

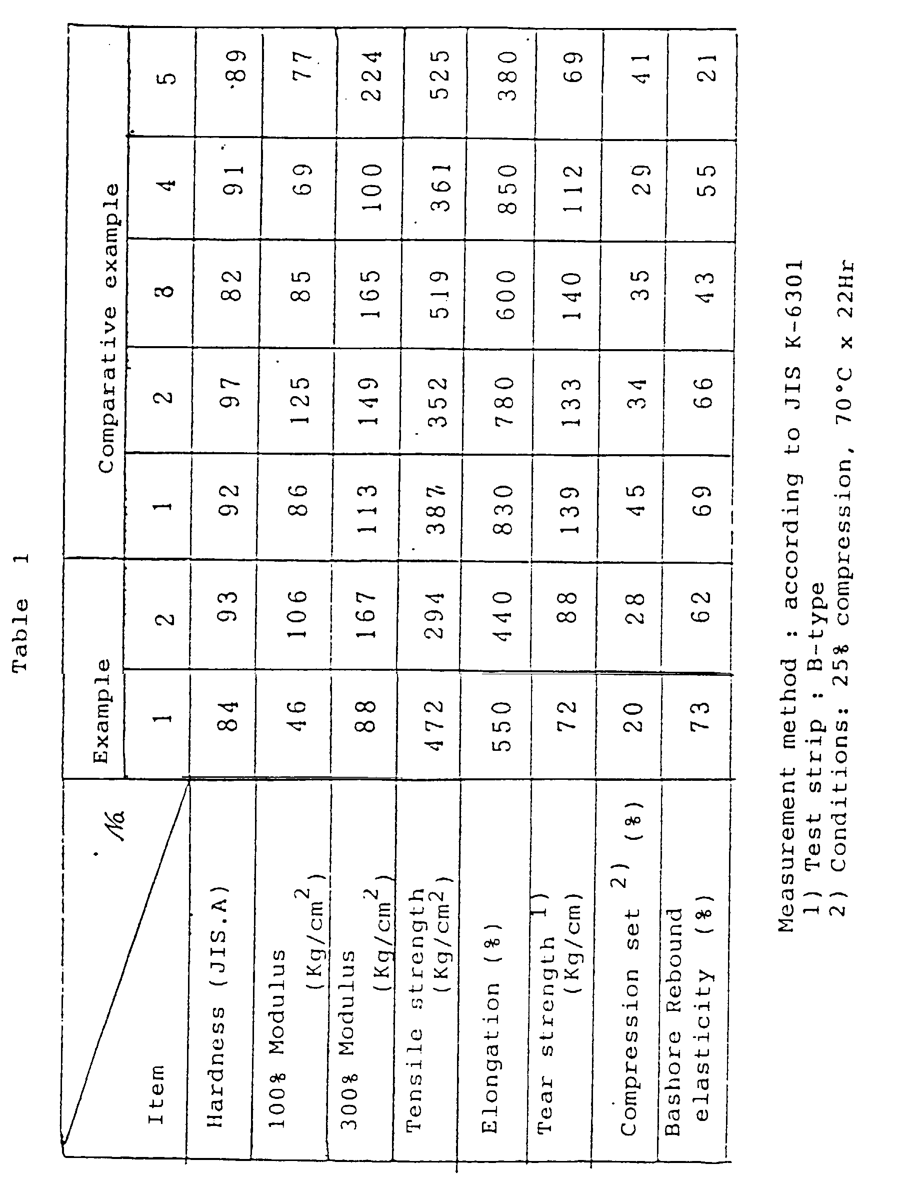

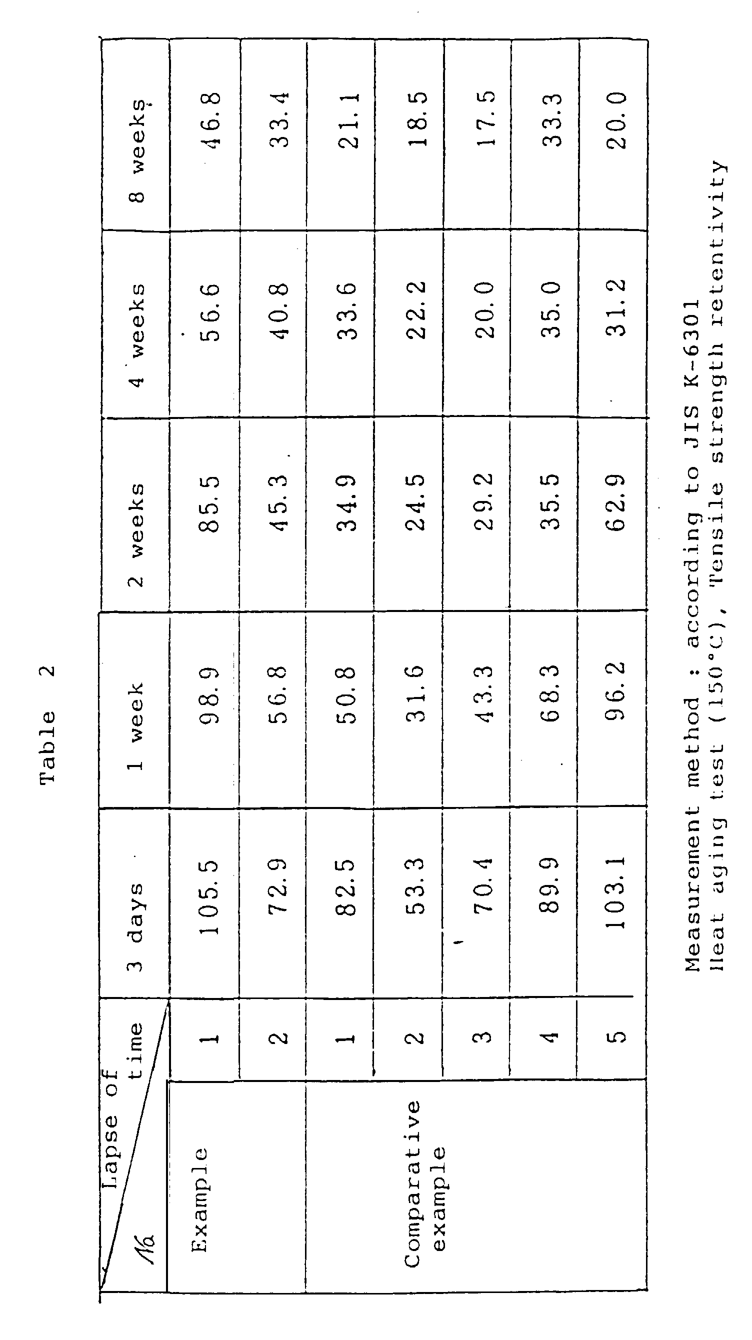

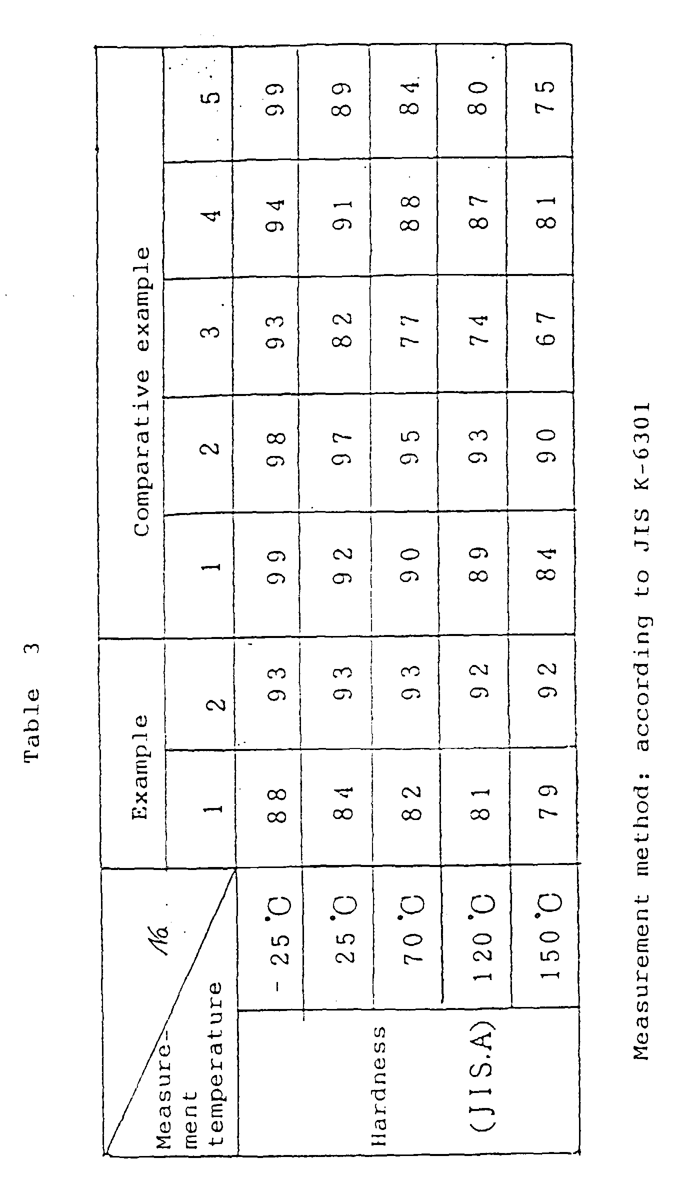

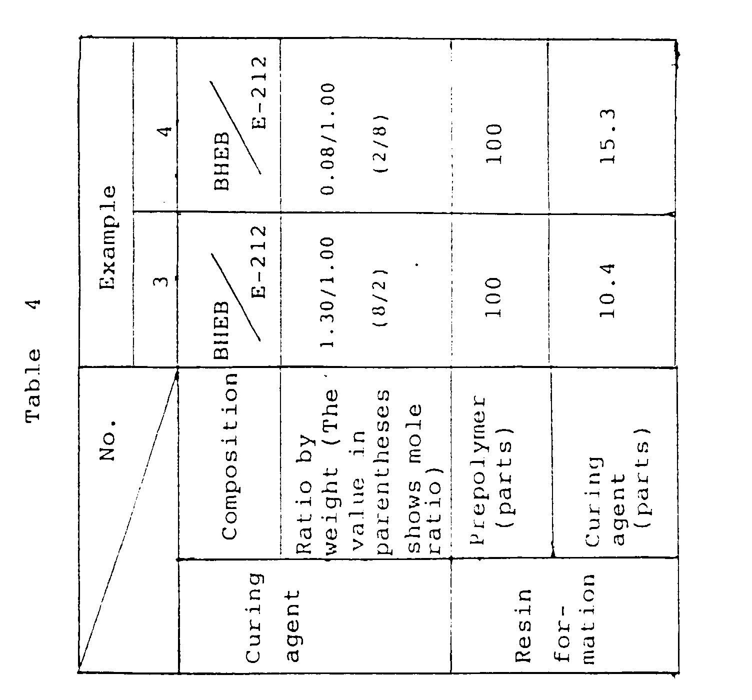

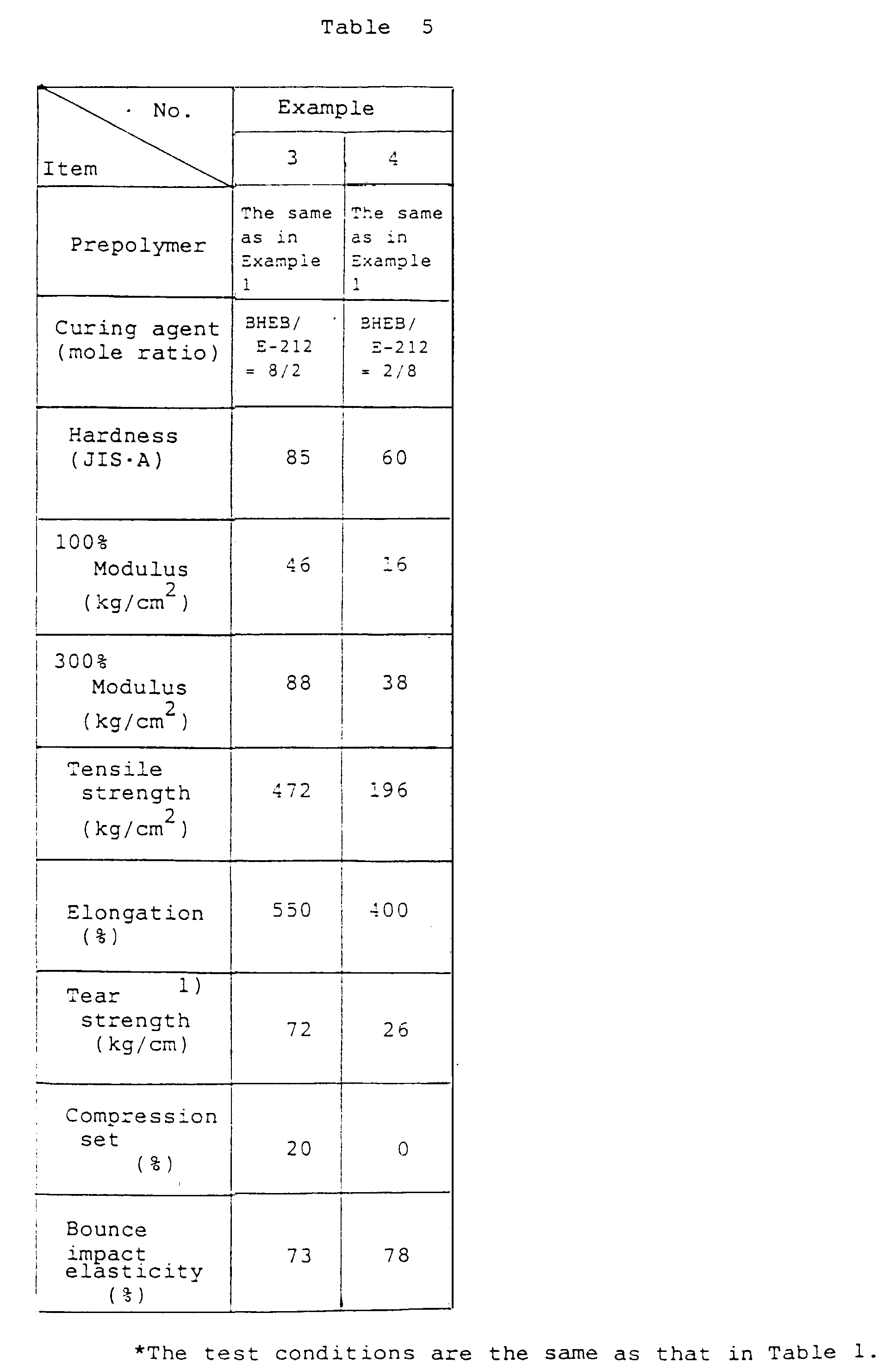

## Claims

1. A thermosetting urethane elastomer prepared from:
(a) a prepolymer having from 2 to 20 weight % terminal isocyanate groups obtained by allowing p-phenylene diisocyanate to react with a compound having 2 or more active hydrogen atoms and a molecular weight from 62 to 6,000 other than 1,4-bis (2-hydroxyethoxy)benzene or a polyol having an isocyanurate ring ; and
(b) as curing agent, 1,4-his (2-hydroxyethoxy) benzene and a polyol having an isocyanurate ring, in a molar ratio of 9.5:0.5 to 1:9.

2. A thermosetting urethane elastomer according to claim 1, wherein the prepolymer has from 3 to 10 weight % terminal isocyanate groups.

3. A thermosetting urethane elastomer according to claim 1 or claim 2, wherein the ratio of NCO equivalents in the prepolymer : OH equivalents in the curing agents is 1:0.8 to 1:0.95.

4. A thermosetting urethane elastomer according to any one of claims 1 to 3, wherein the polyol having an isocyanurate ring is of the general formula (1): 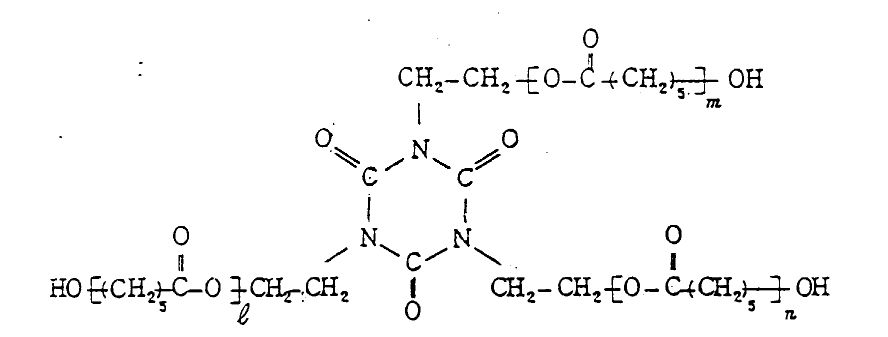 in which each of ℓ, m and n has a value from 0 to 1 and 0 ≤ ℓ + m + n ≤ 3.

## Patentansprüche

1. Ein wärmehärtbares Urethanelastomer, hergestellt aus:
(a) einem Vorpolymer mit 2 bis 20 Gew.-% terminalen Isocyanatgruppen, erhalten, indem man p-Phenylendiisocyanat mit einer Verbindung reagieren läßt, die 2 oder mehr aktive Wasserstoffatome aufweist sowie ein Molekulargewicht von 62 bis 6000, wobei diese Verbindung nicht 1,4-bis(2-hydroxyethoxy)benzol oder ein Polyol mit einem Isocyanuratring ist, und
(b) als einen Härtemittel, 1,4-bis(2-hydroxyethoxy)benzol und ein Polyol mit einem Isocyanuratring in einem molaren Verhältnis von 9:5 : 0:5 bis 1:9.

2. Wärmehärtbares Urethanelastomer nach Anspruch 1, wobei das Vorpolymer 3 bis 10 Gew.-% terminale Isocyanatgruppen aufweist.

3. Wärmehärtbares Urethanelastomer nach Anspruch 1 oder 2, wobei das Verhältnis von NCO-Äquivalenten im Vorpolymer zu OH-Äquivalenten in den Härtemitteln 1:0,8 bis 1:0,95 beträgt.

4. Wärmehärtbares Urethanelastomer nach einem oder mehreren der Ansprüche 1 bis 3, wobei das Polyol, das einen Isocyanuratring aufweist, die folgende allgemeine Formel (1) aufweist: 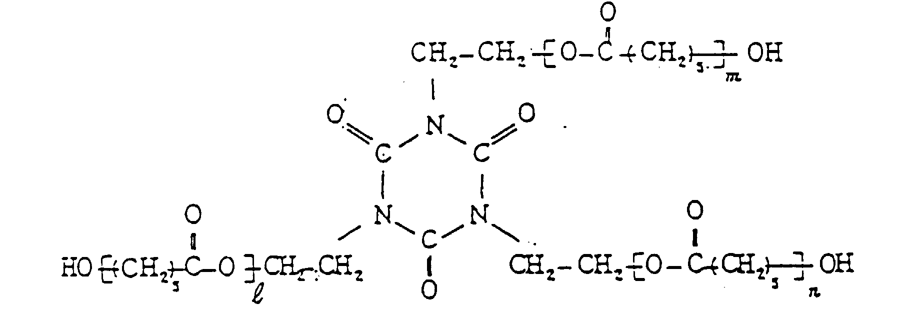 wobei l, m und n jeweils einen Wert von 0 bis 1 annehmen und 0 ≤ l + m + n≤ 3 ist.

## Revendications

1. Elastomère d'uréthanne thermodurcissable, préparé à partir :
(a) d'un prépolymère ayant 2 à 20 pour cent en poids de groupes isocyanate terminaux, obtenu en laissant du p-phénylène-diisocyanate réagir avec un composé ayant 2 ou plus de 2 atomes d'hydrogène actifs et un poids moléculaire de 62 à 6000, autre que le 1,4-bis(2-hydroxyéthoxy)benzène ou un polyol ayant un noyau isocyanurate ; et
(b) comme durcisseur, de 1,4-bis(2-hydroxyéthoxy)benzène et d'un polyol ayant un noyau isocyanurate, en un rapport molaire de 9,5:0,5 à 1:9.

2. Elastomère d'uréthanne thermodurcissable suivant la revendication 1, dans lequel le prépolymère comprend 3 à 10 % en poids de groupes isocyanate terminaux.

3. Elastomère d'uréthanne thermodurcissable suivant la revendication 1 ou la revendication 2, dans lequel le rapport équivalents de groupes NCO dans le prépolymère : équivalents de groupes OH dans les durcisseurs va de 1:0,8 à 1:0,95.

4. Elastomère d'uréthanne thermodurcissable suivant l'une quelconque des revendications 1 à 3, dans lequel le polyol ayant un noyau isocyanurate répond à la formule générale (1) : 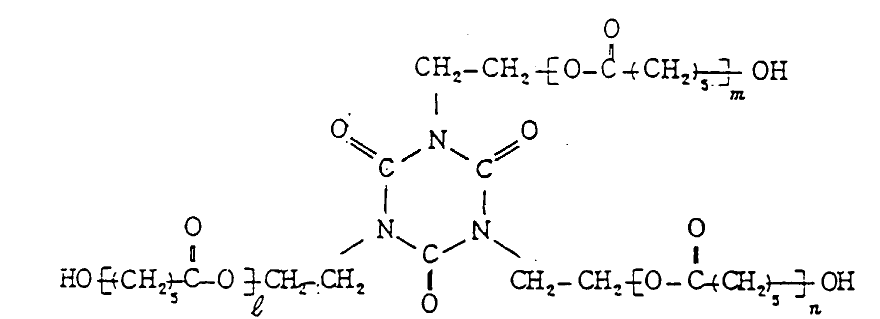 dans laquelle chacun des indices *ℓ,* m et n a une valeur de 0 à 1 et 0 ≤ ℓ + m + n ≤ 3.
